# FASCICULE DE BREVET EUROPEEN

(11) **EP 3 209 481 B1**
(45) Date de publication et mention de la délivrance du brevet: **19.09.2018**
(21) Numéro de dépôt: 15791701.4
(22) Date de dépôt: 21.10.2015
(51) Int. Cl.: B29C 49/56, B29C 49/48, B29C 49/36, B29C 49/06

(54) **MÉCANISME DE COMMANDE D'OUVERTURE DE MOULE À AXE DOUBLE**
DOPPELACHSIGER FORMÖFFNUNGSSTEUERUNGSMECHANISMUS
DOUBLE AXLE MOULD OPENING CONTROL MECHANISM

(30) Priorité: 24.10.2014 FR 1460228
(43) Date de publication de la demande: 30.08.2017
(73) Titulaire: Sidel Participations, 76930 Octeville-sur-Mer (FR)
(72) Inventeur: MICHEL, Jocelyn, 76930 Octeville-sur-Mer (FR); GROSSIN, Emilie, 76930 Octeville-sur-Mer (FR)
(74) Mandataire: Grassin d'Alphonse, Emmanuel Jean Marie
(86) Numéro de dépôt international: PCT/FR2015/052825
(87) Numéro de publication internationale: WO 2016/062969

(56) Documents cités:
- EP-A2- 2 135 726
- FR-A1- 2 825 659
- FR-A1- 2 843 714
- US-A1- 2014 151 940

## Description

L'invention a trait à la commande d'ouverture des moules portefeuilles. Un moule portefeuille comprend classiquement deux demi-moules montés articulés l'un par rapport à l'autre autour d'une charnière commune entre une position fermée où les demi-moules sont appliqués l'un contre l'autre et une position ouverte dans laquelle les demi-moules sont écartés angulairement l'un de l'autre.

On trouve couramment ce type de moule dans les machines de fabrication de récipients par soufflage ou étirage soufflage à partir d'ébauches en matière plastique. Dans la position ouverte, les demi-moules permettent le chargement d'une ébauche, qui a été préalablement chauffée à une température supérieure à la température de transition vitreuse de la matière (environ 80°C pour le polyéthylène téréphtalate ou PET). Réunis en position fermée, les demi-moules définissent conjointement l'empreinte du récipient à former.

Le moule est généralement monté, avec une série de moules similaires, à la périphérie d'un carrousel tournant pour former une machine industrielle de fabrication de récipients en série. L'ouverture et la fermeture de chaque moule est classiquement commandée par un mécanisme dont un exemple de réalisation est proposé par le brevet français FR 2 843 714 (Sidel) et son équivalent américain US 7 249 944. Ce mécanisme comprend deux biellettes de même longueur couplées chacune en rotation à l'avant (côté moule) à un demi-moule respectif, et réunies à l'arrière (côté carrousel) en étant mutuellement articulées autour d'un axe commun. Un système d'actionnement commande le déplacement radial de l'axe commun des biellettes. Ce système comprend un levier (appelé bielle dans le brevet) portant, à une extrémité, un galet circulant sur une came, et une manivelle (appelée bras de commande) solidaire de la bielle par une première extrémité, et couplée par une extrémité opposée à l'axe commun d'articulation des biellettes.

Le mouvement radial du galet, suivant la position angulaire du moule par rapport au bâti du carrousel, provoque le pivotement solidaire du levier et de la manivelle autour de leur axe de rotation, et le déplacement, suivant un arc de cercle, de l'axe commun des biellettes, qui provoque l'ouverture (ou la fermeture) du compas et, par voie de conséquence, la fermeture respective (ou l'ouverture) du moule.

Ce mécanisme équipe aujourd'hui de nombreuses machines de fabrication de récipients, dont les cadences de production atteignent plusieurs dizaines de milliers de récipients par heure. Le temps de cycle de formage, entre l'instant où l'ébauche est introduite dans le moule, et l'instant où le récipient formé est évacué du moule, est généralement inférieur à 2,5 secondes. Pour chaque moule dont est pourvue la machine, le nombre de cycles (comprenant une ouverture et une fermeture du moule) effectués chaque heure est supérieur à 1 500. Ainsi, pour une machine fonctionnant par hypothèse sur deux tranches de huit heures par jour (on suppose que la souffleuse est en arrêt au cours de la troisième tranche, pour diverses opérations de maintenance ou de réglage), sept jours par semaine tout au long de l'année, chaque moule équipant cette machine effectue chaque année un nombre de cycle supérieur à huit millions.

On comprend donc que le mécanisme d'ouverture et fermeture du moule soit un composant critique, sur le bon fonctionnement duquel repose en grande partie la fiabilité et la durabilité de la machine. C'est pourquoi les pièces de ce mécanisme doivent être correctement dimensionnées afin d'améliorer leur tenue à la fatigue, et bien lubrifiées pour améliorer leur résistance à l'usure.

Les efforts d'ouverture et de fermeture du moule sont transmis par la came au galet, puis aux biellettes via le levier et la manivelle.

On constate, dans les mécanismes du type décrit dans le brevet FR 2 843 714, des pics d'efforts importants dans le galet, notamment à l'ouverture du moule. Des mesures effectuées à l'aide de jauges de contraintes montrent que ces pics d'efforts peuvent atteindre, voire dépasser, 1800 N. Comme évoqué ci-dessus, on peut certes dimensionner en conséquence le galet, le levier, la manivelle et les biellettes, mais il en résulte un accroissement des masses embarquées, au détriment du poids de la machine, de son inertie et donc de l'énergie consommée pour en assurer le fonctionnement aux cadences requises.

Un objectif de l'invention est de proposer un mécanisme dont l'architecture permette de réduire les efforts, de sorte à limiter la fatigue et l'usure des pièces mobiles, et afin également de réduire les masses embarquées.

Un autre objectif de l'invention est de proposer un mécanisme garantissant une meilleure précision dans la commande d'ouverture et de fermeture du moule.

A cet effet, il est proposé, en premier lieu, un mécanisme de commande d'ouverture et de fermeture d'un moule portefeuille comprenant un demi-moule droit et un demi-moule gauche montés articulés l'un par rapport à l'autre autour d'une charnière commune entre une position fermée où les demi-moules sont appliqués l'un contre l'autre et une position ouverte dans laquelle les demi-moules sont écartés angulairement l'un de l'autre, ce mécanisme comprenant :
- une biellette droite couplée en rotation, à une extrémité avant, au demi-moule droit autour d'un axe externe droit ;
- une biellette gauche couplée en rotation, à une extrémité avant, au demi-moule gauche autour d'un axe externe gauche ;
- un système d'actionnement comprenant une manivelle articulée autour d'un axe de rotation fixe par rapport à la charnière du moule et couplée en rotation à la biellette droite et à la biellette gauche autour, respectivement, d'un axe interne droit et d'un axe interne gauche espacés l'un de l'autre.

Cet espacement des axes internes des biellettes permet de limiter les efforts dans les pièces mobiles (de l'ordre de 25%), et donc de les dimensionner de manière raisonnable, au bénéfice d'un allègement des masses embarquées. En outre, il a été constaté que cette architecture permet d'améliorer la précision de la commande d'ouverture et de fermeture du moule.

Diverses caractéristiques supplémentaires peuvent être prévues, seules ou en combinaison :
- l'axe de rotation de la manivelle, l'axe interne droit et l'axe interne gauche sont coplanaires ;
- l'axe interne droit est plus proche de l'axe de rotation de la manivelle que l'axe interne gauche ;
- la biellette droite présente un entraxe inférieur à celui de la biellette gauche ;
- les distances des axes externes à la charnière sont identiques ;
- le système d'actionnement comprend un levier de commande solidaire de la manivelle et portant un suiveur de came qui coopère avec un chemin de came, ou un moteur couplé à l'axe de rotation de la manivelle et entraînant celle-ci en rotation ;
- le mécanisme comprend au moins deux biellettes droites superposées et au moins deux biellettes gauches superposées.

Il est proposé, en deuxième lieu, une unité de moulage de récipients, qui comprend un moule portefeuille comprenant un demi-moule droit et un demi-moule gauche montés articulés l'un par rapport à l'autre autour d'une charnière commune entre une position fermée où les demi-moules sont appliqués l'un contre l'autre et une position ouverte dans laquelle les demi-moules sont écartés angulairement l'un de l'autre, et un mécanisme de commande d'ouverture du moule portefeuille, tel que décrit ci-dessus.

Il est proposé, en troisième lieu, une machine de fabrication de récipients qui comprend un carrousel et une pluralité de telles unités de moulage, montées sur le carrousel.

D'autres objets et avantages de l'invention apparaîtront à la lumière de la description d'un mode de réalisation, faite ci-après en référence aux dessins annexés dans lesquels :
- la figure 1 est une vue en perspective montrant partiellement une machine de fabrication de récipients, cette vue étant centrée sur une unité de moulage équipée d'un moule représenté en position fermée ;
- la figure 2 est une vue en perspective montrant l'unité de moulage suivant une autre orientation ;
- la figure 3 est une vue de l'unité de moulage des figures 1 et 2, représentée suivant encore une autre orientation et sans sa console de support du moule ;
- la figure 4 est une vue de dessus de l'unité de moulage de la figure 3 ;
- la figure 5 est une vue similaire à la figure 1, montrant l'unité de moulage en position ouverte du moule ;
- la figure 6 est une vue similaire à la figure 3, montrant l'unité de moulage en position ouverte du moule ;
- la figure 7 est une vue similaire à la figure 4, montrant l'unité de moulage en position ouverte du moule ;
- la figure 8 est un diagramme sur lequel sont tracées des courbes d'efforts nécessaires à l'ouverture du moule ;
- la figure 9 est une vue de détail du mécanisme de commande, suivant une variante de réalisation.

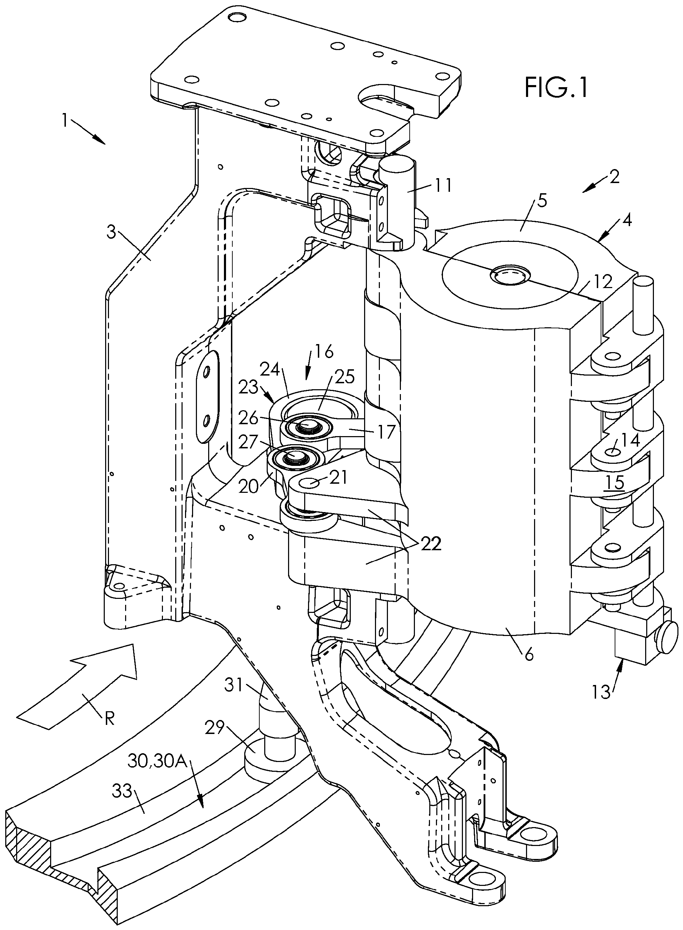

Sur les figures 1, 2 et 5 est partiellement représentée une machine **1** de fabrication de récipients par soufflage ou étirage soufflage à partir d'ébauches en matière plastique tel que PET.

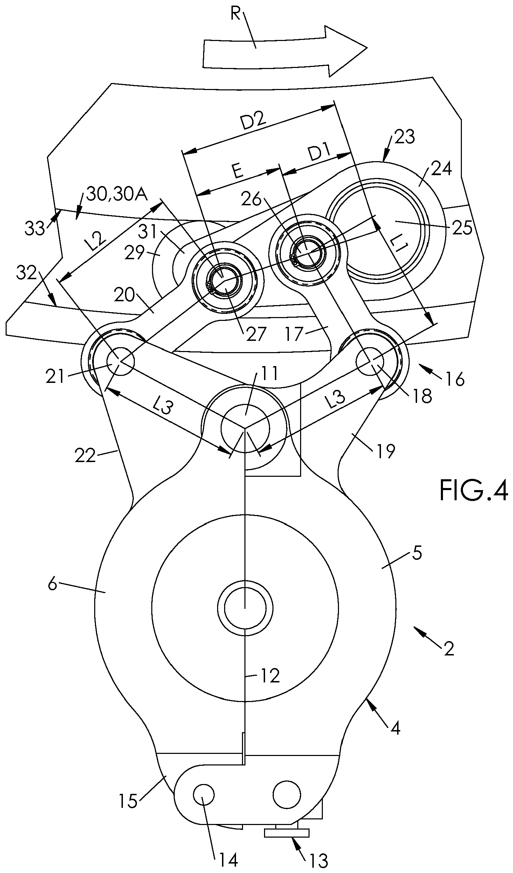

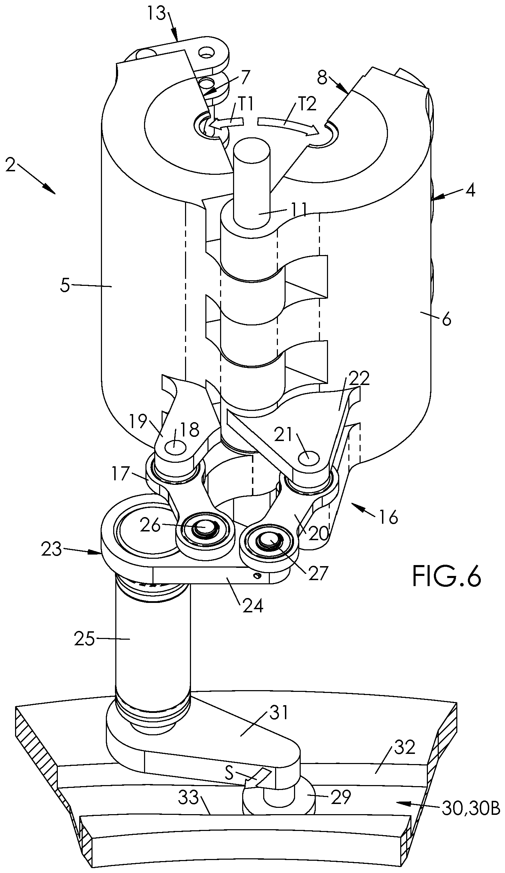

Cette machine **1** comprend un carrousel tournant et une série d'unités **2** de moulage montées en étoile sur le carrousel, à une périphérie de celui-ci. Dans ce qui suit, les termes « externe » et « avant » désignent une localisation éloignée de l'axe de rotation de la machine **1,** tandis que les termes « interne » et « arrière » désignent a contrario une localisation relativement plus proche de l'axe de rotation de la machine **1.** On a représenté par la flèche **R** le sens de rotation de la machine **1,** qui correspond au sens trigonométrique (ou antihoraire) sur les figures. Les termes « droit » et « gauche » sont employés pour qualifier des éléments de structure ou de fonction similaires mais localisés respectivement en amont et en aval dans le sens de rotation de la machine **1**, c'est-à-dire respectivement à droite et à gauche des figures 4 et 6.

Chaque unité **2** de moulage, dont une seule est illustrée, comprend une console **3** fixée de manière rigide (par ex. au moyen de vis) sur le carrousel, et un moule **4** monté sur la console **3.**

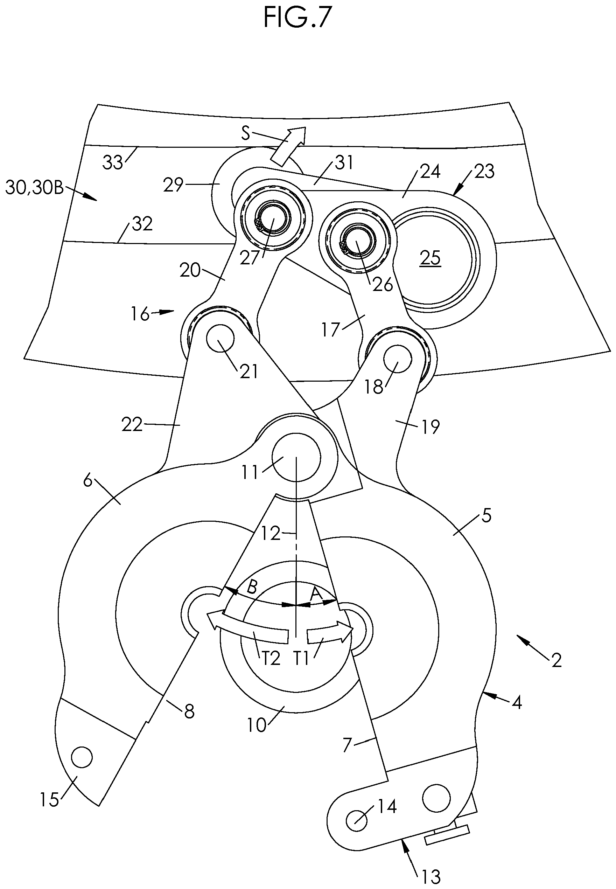

Le moule **4** est du type portefeuille et comprend un demi-moule **5** droit (à droite sur les figures 4 et 7) et un demi-moule **6** gauche (à gauche sur les figures 4 et 7) dans chacun desquels est formée en creux, à partir d'une face **7**, **8** interne plane respective, une demi-empreinte **9** de la paroi latérale (ou corps) du récipient final.

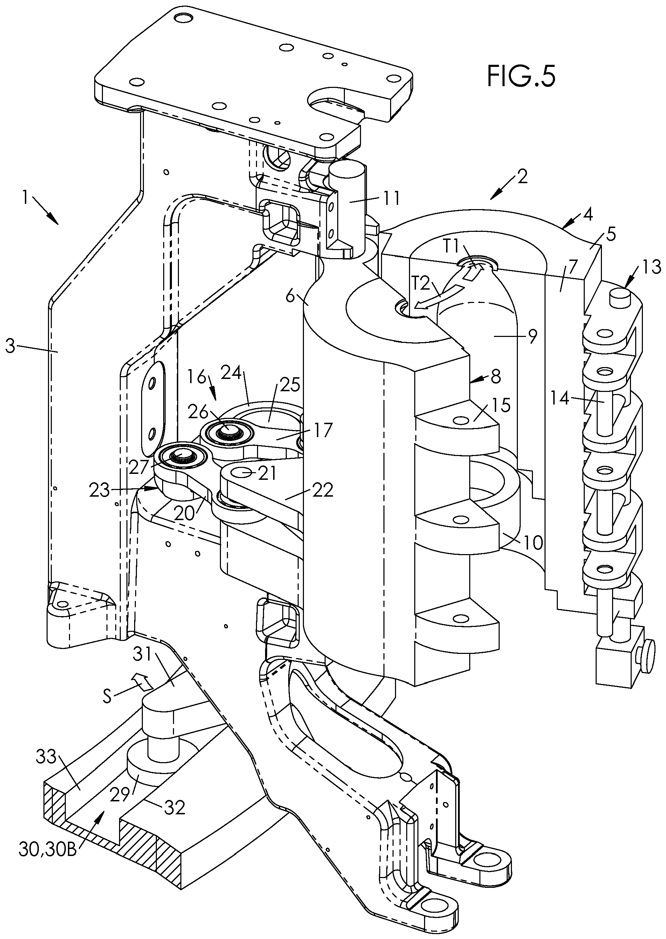

Comme on le voit sur la figure 5, le moule **4** comprend en outre un fond **10** de moule, monté en translation verticale et dans lequel est formée une empreinte du fond du récipient final.

Les demi-moules **5**, **6** sont montés articulés l'un par rapport à l'autre autour d'une charnière **11** commune solidaire de la console **3,** entre :
- une position fermée où les faces **7, 8** internes des demi-moules **5, 6** sont appliquées l'une contre l'autre figures 1 à 4) pour former un plan **12** de joint, et
- une position ouverte dans laquelle les demi-moules **5**, **6** sont écartés angulairement l'un de l'autre (figures 5 à 7), leurs faces **7**, **8** internes formant respectivement avec le plan **12** de joint (en trait mixte sur la figure 7) un angle **A** et un angle **B.**

Comme on le voit sur les figures 1 et 5, le demi-moule **5** droit porte un dispositif **13** de verrouillage du moule **4,** qui comprend une série de pênes **14** coulissants propre à venir se loger, en position fermée du moule **4,** dans des gâches **15** formées sur le demi-moule **6** gauche. Ce dispositif **13** de verrouillage alourdit le demi-moule **5** droit, qui présente par conséquent une masse supérieure à celle du demi-moule **6** gauche. Cette différence de masse (et donc d'inertie) a une importance, comme nous le verrons ci-après.

L'unité **2** de moulage comprend en outre un mécanisme **16** de commande d'ouverture et de fermeture du moule **4** portefeuille.

Ce mécanisme **16** comprend, en premier lieu, une paire de biellettes, à savoir :
- une biellette **17** droite couplée en rotation, à une extrémité avant, au demi-moule **5** droit autour d'un axe **18** externe droit solidaire d'une oreille **19** droite en saillie à l'arrière du demi-moule **5** droit ;
- une biellette **20** gauche couplée en rotation, à une extrémité avant, au demi-moule **6** gauche autour d'un axe **21** externe gauche solidaire d'une oreille **22** gauche en saillie à l'arrière du demi-moule **6** gauche.

Le mécanisme **16** comprend, en deuxième lieu, un système **23** d'actionnement comprenant une manivelle **24** articulée autour d'un axe **25** de rotation fixe par rapport à la charnière **11** du moule et couplée en rotation aux biellettes **17, 20,** et plus précisément :
- à la biellette **17** droite par une extrémité arrière de celle-ci, autour d'un axe **26** interne droit ;
- à la biellette **20** gauche par une extrémité arrière de celle-ci, autour d'un axe **27** interne gauche.

La biellette **17** droite présente un entraxe, c'est-à-dire une distance entre son axe **18** externe droit et son axe **26** interne droit, noté **L1.** De manière similaire, la biellette **20** gauche présente un entraxe, c'est-à-dire une distance entre son axe **21** externe gauche et son axe **27** interne gauche, noté **L2.**

Selon un mode de réalisation préféré illustré sur la figure 4, les axes **18**, **21** externes sont parallèles entre eux et à la charnière **11** du moule, dont ils sont équidistants. On note **L3** la distance des axes **18, 21** externes à la charnière **11** (c'est-à-dire à l'axe de rotation défini par celle-ci).

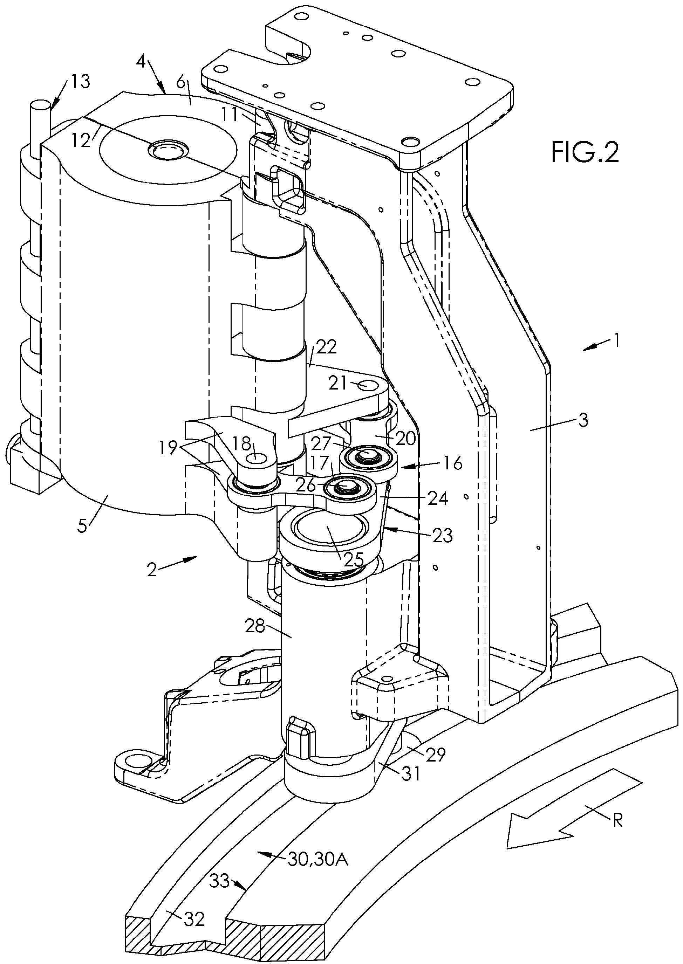

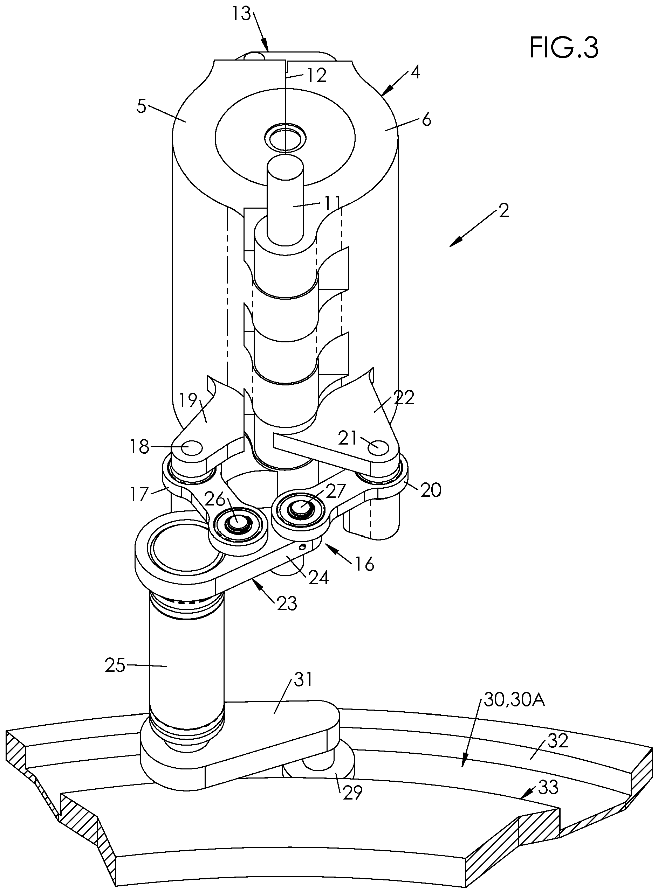

Comme on le voit bien sur la figure 2, l'axe **25** de rotation de la manivelle **24** est monté dans une fusée **28** solidaire de (ou intégrée à) la console **3.** La manivelle **24** s'étend à partir d'une extrémité supérieure de l'axe **25.** Comme on le voit bien sur les figures 3 et 6, le système **23** d'actionnement comprend un suiveur **29** de came qui coopère avec un chemin **30** de came (que l'on dénomme ci-après plus simplement came), solidaire d'un bâti fixe de la machine **1** et qui s'étend en boucle fermée autour de l'axe central de rotation de la machine **1.** En fonctionnement, l'unité **2** de moulage se déplace le long de la came **30,** qui demeure fixe. Dans l'exemple illustré, le suiveur **29** de came se présente sous forme d'un galet, de préférence monté sur roulement. Le système **23** d'actionnement comprend un levier **31** solidaire de l'axe **25,** qui s'étend à partir d'une extrémité inférieure de celui-ci et à une extrémité duquel est monté le galet **29.**

Comme illustré sur les figures, et plus visiblement sur les figures 1, 2, 3, 5 et 6, la came **30** se présente sous forme d'une rainure à section rectangulaire, le galet **29** circulant dans cette rainure, en appui contre une face **32** externe ou une face **33** interne de la came **30** selon qu'il s'agisse d'accélérer ou de freiner le mouvement d'ouverture (ou de fermeture) des demi-moules **5, 6.**

La rotation du levier **31** sous l'action de la came **30** sur le galet provoque la rotation solidaire de la manivelle **24** et l'ouverture du moule **4** via les biellettes **17, 20,** comme il sera expliqué plus en détail ci-après.

Selon un mode de réalisation préféré, l'axe **26** interne droit et l'axe **27** interne gauche sont parallèles entre eux et à l'axe **25** de rotation de la manivelle **24.** En outre, comme on le voit bien sur les figures, l'axe **26** interne droit et l'axe **27** interne gauche sont espacés l'un de l'autre. On note **D1** la distance de l'axe **26** interne droit à l'axe **25** de rotation de la manivelle **24, D2** la distance de l'axe **27** interne gauche à l'axe **25** de rotation de la manivelle **24,** et **E** l'écartement des axes **26, 27** internes.

Selon un mode préféré de réalisation, l'axe **25** de rotation de la manivelle **24,** l'axe **26** interne droit et l'axe **27** interne gauche sont coplanaires. En d'autres termes, les points d'intersection des axes **25, 26**, **27** avec un plan perpendiculaire (horizontal) sont alignés. Comme on le voit sur les figures, l'axe **26** interne droit est plus proche de l'axe **25** de rotation de la manivelle **24** que l'axe **27** interne gauche. En d'autres termes, **D1 < D2.** Dans ce cas, **E** est égal à la différence entre **D1** et **D2** : **E = D2 - D1.**

Les entraxes **L1** et **L2** respectifs des biellettes **17, 20** peuvent être égaux (ou sensiblement égaux) mais, selon un mode préféré de réalisation, la biellette **17** droite présente un entraxe **L1** inférieur à l'entraxe **L2** de la biellette **20** gauche : **L1** < **L2,** ce qui permet une meilleure intégration mécanique du mécanisme **16,** c'est-à-dire que le mécanisme **16** présente un encombrement radial relativement réduit.

On décrit à présent la cinématique d'ouverture du moule **4,** à partir de sa position fermée, dans laquelle le galet **29** se trouve dans une portion **30A** périphérique de la came **30** où le galet **29** est en appui contre la face **33** interne de celle-ci, et dans laquelle les faces **7, 8** planes des demi-moules **5**, **6** sont appliquées l'une contre l'autre pour former le plan **12** de joint. Dans cette position, les pênes **14** sont logés dans les gâches **15,** verrouillant ainsi le moule **4** en position fermée.

La rotation du carrousel dans le sens indiqué par la flèche **R** (la came **30** restant fixe) entraîne celle de la console **3** et de l'ensemble de l'unité **2** de moulage par rapport à la came **30,** jusqu'à ce que le galet atteigne une portion **30B** de la came **30,** localement décalée radialement vers l'intérieur par rapport à la portion **30A** périphérique. Dès lors, le dispositif **13** de verrouillage est commandé pour que les pênes **14** se désolidarisent des gâches **15** pour déverrouiller le moule **4.** Le galet **29** vient alors en appui contre la face **32** externe de la came **30** qui le sollicite vers l'intérieur, dans le sens indiqué par la flèche **S.** Le galet **29** entraîne solidairement en rotation le levier **31** et, via l'axe **25,** la manivelle **24** dont la rotation induit un effort de traction aux axes **18, 21** via les biellettes **17**, **20** qui tend à ouvrir le demi-moule **5** droit et le demi-moule **6** gauche dans les sens opposés indiqués par les flèches **T1, T2.**

La géométrie du mécanisme **16** de commande d'ouverture et fermeture induit une ouverture asymétrique du moule **4.** En effet, on constate que l'angle **A** d'ouverture du demi-moule **5** droit est inférieur à l'angle **B** d'ouverture du demi-moule **6** gauche, dans un rapport de 1 à 2 environ.

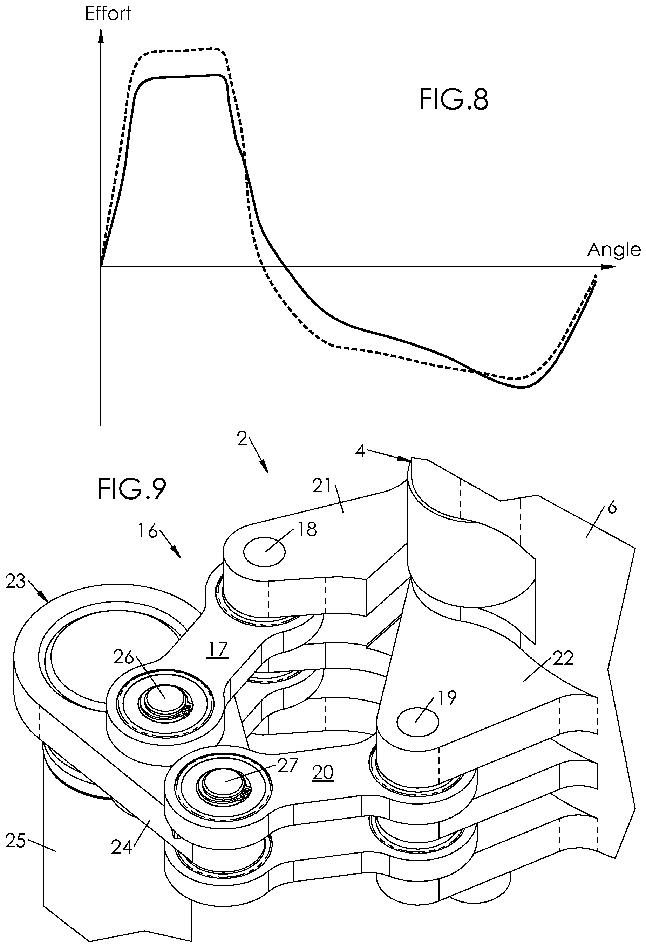

On a tracé sur la figure 8 :
- en trait plein, une courbe représentant les variations de l'effort induit sur le galet **29** lors d'une phase complète d'ouverture du moule **4** au moyen du mécanisme **16** de commande d'ouverture et fermeture, en fonction de l'angle de l'unité **2** de moulage sur le carrousel de la machine **1** (par convention l'angle nul est celui à partir duquel débute l'ouverture du moule **4**) ;
- en pointillés, une courbe représentant les variations de cet effort lorsque l'ouverture du moule est réalisée au moyen d'un mécanisme ordinaire.

On voit bien que le travail à fournir (égal à l'aire sous chaque courbe) est inférieur dans le cas du mécanisme **16** décrit ci-dessus et illustré sur les figures 1 à 7, alors même que l'angle d'ouverture est identique. Cela découle de l'architecture du mécanisme **16,** grâce auquel, à ouverture angulaire égale du moule **4,** la course angulaire du demi-moule **5** le plus lourd est plus faible que celle du demi-moule **6** le plus léger. En outre, la diminution de l'effort maximal appliqué sur le galet **29** permet d'augmenter les cadences tout en limitant l'usure à l'interface entre le galet **29** et la came **30.**

L'architecture du mécanisme **16** de commande d'ouverture et fermeture du moule **4,** et en particulier la séparation des axes **26, 27** internes des biellettes **17, 20,** permet par conséquent de limiter les efforts dans les pièces mobiles, et donc de les dimensionner de manière raisonnable (en particulier les biellettes **17, 20**), au bénéfice d'un allègement des masses embarquées. Il en résulte également une meilleure précision de la commande d'ouverture et de fermeture, en raison notamment d'une meilleure répartition des efforts exercés par chaque biellette **17, 20** sur chaque demi-moule **5**, **6** respectif.

Cette architecture du mécanisme **16** de commande permet également de doubler sans difficulté les biellettes **17, 20,** ainsi qu'en témoigne la variante illustrée sur la figure 9, dans laquelle le mécanisme **16** comprend au moins deux biellettes **17** droites superposées et au moins deux biellettes **20** gauches superposées. Dans ce cas, la reprise des efforts est partagée entre les biellettes **17, 20** de chaque paire, au bénéfice de la robustesse, de la fiabilité et de la durée de vie du mécanisme **16.**

Dans l'exemple de réalisation qui vient d'être décrit, le système **23** d'actionnement, qui comprend un levier **31** portant un galet **29,** est mécanique. En variante, il est cependant possible de le motoriser : à cet effet, le système **23** d'actionnement comprend par exemple un moteur couplé à l'axe **25** de la manivelle **24** pour entraîner celle-ci en rotation. Ce moteur est par exemple piloté par une unité de contrôle qui commande la rotation du moteur (et donc de l'axe **25** qui, à son tour, entraîne la manivelle **24** et, via les biellettes **17, 20,** les demi-moules **5, 6**). L'ouverture et la fermeture du moule **4** est commandée par l'unité de contrôle en fonction de la position angulaire de l'unité **2** de moulage, fournie par exemple par un capteur angulaire (tel qu'un roulement instrumenté) monté sur l'arbre de rotation de la machine **1.**

Cette motorisation ne modifie en rien les valeurs de couple nécessaires à l'ouverture et à la fermeture du moule **4,** qui demeurent inférieures à celles des mécanismes connus.

## Revendications

1. Mécanisme (**16**) de commande d'ouverture et de fermeture d'un moule (**4**) portefeuille comprenant un demi-moule (**5**) droit et un demi-moule (**6**) gauche montés articulés l'un par rapport à l'autre autour d'une charnière (1**1**) commune entre une position fermée où les demi-moules (**5**, **6**) sont appliqués l'un contre l'autre et une position ouverte dans laquelle les demi-moules (**5**, **6**) sont écartés angulairement l'un de l'autre, ce mécanisme comprenant :
- une biellette (**17**) droite couplée en rotation, à une extrémité avant, au demi-moule (**5**) droit autour d'un axe (**18**) externe droit ;
- une biellette (**20**) gauche couplée en rotation, à une extrémité avant, au demi-moule (**6**) gauche autour d'un axe (**21**) externe gauche ;
- un système (**23**) d'actionnement comprenant une manivelle (**24**) articulée autour d'un axe (**25**) de rotation fixe par rapport à la charnière (**11**) du moule et couplée en rotation à la biellette (**17**) droite et à la biellette (**20**) gauche à des extrémités arrière respectives de celles-ci ;
ce mécanisme étant **caractérisé en ce que** la manivelle (**24**) est couplée en rotation à la biellette (**17**) droite et à la biellette (**20**) gauche autour, respectivement, d'un axe (**26**) interne droit et d'un axe (**27**) interne gauche espacés l'un de l'autre.

2. Mécanisme (**16**) selon la revendication 1, **caractérisé en ce que** l'axe (**25**) de rotation de la manivelle (**24**), l'axe (**26**) interne droit et l'axe (**27**) interne gauche sont coplanaires.

3. Mécanisme (**16**) selon la revendication 1 ou la revendication 2, **caractérisé en ce que** l'axe (**26**) interne droit est plus proche de l'axe (**25**) de rotation de la manivelle (**24**) que l'axe (**27**) interne gauche.

4. Mécanisme (**16**) selon l'une des revendications précédentes, **caractérisé en ce que** la biellette (**17**) droite présente un entraxe (**L1**) inférieur à celui (**L2**) de la biellette (**20**) gauche.

5. Mécanisme (**16**) selon l'une des revendications précédentes, **caractérisé en ce que** les distances (**L3**) des axes (**18**, **21**) externes à la charnière (**11**) sont identiques.

6. Mécanisme (**16**) selon l'une des revendications précédentes, **caractérisé en ce que** le système (**23**) d'actionnement comprend un levier (**31**) de commande solidaire de la manivelle (**24**) et portant un suiveur (**29**) de came qui coopère avec un chemin (**30**) de came.

7. Mécanisme (**16**) selon l'une des revendications 1 à 5, **caractérisé en ce que** le système (**23**) d'actionnement comprend un moteur couplé à l'axe (**25**) de rotation de la manivelle et entraînant celle-ci en rotation.

8. Mécanisme (**16**) selon l'une des revendications précédentes, **caractérisé en ce qu'**il comprend au moins deux biellettes (**17**) droites superposées et au moins deux biellettes (**20**) gauches superposées.

9. Unité (**2**) de moulage de récipients, qui comprend un moule (**4**) portefeuille comprenant un demi-moule (**5**) droit et un demi-moule (**6**) gauche montés articulés l'un par rapport à l'autre autour d'une charnière (**11**) commune entre une position fermée où les demi-moules (**5**, **6**) sont appliqués l'un contre l'autre et une position ouverte dans laquelle les demi-moules (**5, 6**) sont écartés angulairement l'un de l'autre, et un mécanisme (**16**) de commande d'ouverture du moule (**4**) portefeuille selon l'une des revendications précédentes.

10. Machine (**1**) de fabrication de récipients qui comprend un carrousel et une pluralité d'unités (**2**) de moulage selon la revendication 9, montées sur le carrousel.

## Patentansprüche

1. Mechanismus (16) zur Öffnungs- und Schließsteuerung einer zusammenklappbaren Form (4), die eine rechte Formhälfte (5) und eine linke Formhälfte (6) enthält, die zwischen einer geschlossenen Stellung, in der die Formhälften (5, 6) gegeneinander gelegt sind, und einer offenen Stellung, in der die Formhälften (5, 6) winkelmäßig voneinander entfernt sind, um ein gemeinsames Scharnier (11) aneinander angelenkt sind, wobei dieser Mechanismus enthält:
- einen rechten Schwenkarm (17), der an einem vorderen Ende um eine rechte äußere Achse (18) mit der rechten Formhälfte (5) in Drehung gekoppelt ist;
- einen linken Schwenkarm (20), der an einem vorderen Ende um eine linke äußere Achse (21) mit der linken Formhälfte (6) in Drehung gekoppelt ist;
- ein Betätigungssystem (23), das eine Kurbel (24) enthält, die um eine bezüglich des Scharniers (11) der Form ortsfeste Drehachse (25) angelenkt und mit dem rechten Schwenkarm (17) und mit dem linken Schwenkarm (20) an jeweiligen hinteren Enden von diesen in Drehung gekoppelt ist;
wobei dieser Mechanismus **dadurch gekennzeichnet ist, dass** die Kurbel (24) mit dem rechten Schwenkarm (17) und mit dem linken Schwenkarm (20) um eine rechte innere Achse (26) bzw. eine linke innere Achse (27) in Drehung gekoppelt ist, die einen Abstand zueinander haben.

2. Mechanismus (16) nach Anspruch 1, **dadurch gekennzeichnet, dass** die Drehachse (25) der Kurbel (24), die rechte innere Achse (26) und die linke innere Achse (27) koplanar sind.

3. Mechanismus (16) nach Anspruch 1 oder Anspruch 2, **dadurch gekennzeichnet, dass** die rechte innere Achse (26) der Drehachse (25) der Kurbel (24) näher ist als die linke innere Achse (27).

4. Mechanismus (16) nach einem der vorhergehenden Ansprüche, **dadurch gekennzeichnet, dass** der rechte Schwenkarm (17) einen geringeren Achsabstand (L1) aufweist als derjenige (L2) des linken Schwenkarms (20) .

5. Mechanismus (16) nach einem der vorhergehenden Ansprüche, **dadurch gekennzeichnet, dass** die Abstände (L3) der äußeren Achsen (18, 21) zum Scharnier (11) gleich sind.

6. Mechanismus (16) nach einem der vorhergehenden Ansprüche, **dadurch gekennzeichnet, dass** das Betätigungssystem (23) einen Steuerhebel (31) enthält, der fest mit der Kurbel (24) verbunden ist und einen Nockenfolger (29) trägt, der mit einer Nockenbahn (30) zusammenwirkt.

7. Mechanismus (16) nach einem der Ansprüche 1 bis 5, **dadurch gekennzeichnet, dass** das Betätigungssystem (23) einen Motor enthält, der mit der Drehachse (25) der Kurbel gekoppelt ist und diese in Drehung versetzt.

8. Mechanismus (16) nach einem der vorhergehenden Ansprüche, **dadurch gekennzeichnet, dass** er mindestens zwei übereinander angeordnete rechte Schwenkarme (17) und mindestens zwei übereinander angeordnete linke Schwenkarme (20) enthält.

9. Formgebungseinheit (2) für Behälter, die eine zusammenklappbare Form (4), die eine rechte Formhälfte (5) und eine linke Formhälfte (6) enthält, die zwischen einer geschlossenen Stellung, in der die Formhälften (5, 6) gegeneinander gelegt sind, und einer offenen Stellung, in der die Formhälften (5, 6) winkelmäßig voneinander entfernt sind, um ein gemeinsames Scharnier (11) aneinander angelenkt sind, und einen Mechanismus (16) zur Öffnungssteuerung der zusammenklappbaren Form (4) nach einem der vorhergehenden Ansprüche enthält.

10. Maschine (1) zur Fertigung von Behältern, die ein Karussell und eine Vielzahl von Formgebungseinheiten (2) nach Anspruch 9 enthält, die auf das Karussell montiert sind.

## Claims

1. Mechanism (16) for controlling the opening and closing of a folding mould (4) comprising a right half-mould (5) and a left half-mould (6) mounted articulated relative to one another about a common hinge (11) between a closed position in which the half-moulds (5, 6) are pressed against one another and an open position in which the half-moulds (5, 6) are separated angularly from one another, this mechanism comprising:
- a right connecting rod (17) coupled in rotation, at a front end, to the right half-mould (5) about a right outer axis (18);
- a left connecting rod (20) coupled in rotation, at a front end, to the left half-mould (6) about a left outer axis (21);
- an actuation system (23) comprising a crank (24) articulated about an axis (25) of rotation that is fixed relative to the hinge (11) of the mould and coupled in rotation to the right connecting rod (17) and to the left connecting rod (20) at respective rear ends thereof;
this mechanism being **characterized in that** the crank (24) is coupled in rotation to the right connecting rod (17) and to the left connecting rod (20) about, respectively, a right inner axis (26) and a left inner axis (27) spaced apart from one another.

2. Mechanism (16) according to Claim 1, **characterized in that** the axis (25) of rotation of the crank (24), the right inner axis (26) and the left inner axis (27) are coplanar.

3. Mechanism (16) according to Claim 1 or Claim 2, **characterized in that** the right inner axis (26) is closer to the axis (25) of rotation of the crank (24) than the left inner axis (27).

4. Mechanism (16) according to one of the preceding claims, **characterized in that** the right connecting rod (17) has a centre-to-centre distance (L1) less than that (L2) of the left connecting rod (20).

5. Mechanism (16) according to one of the preceding claims, **characterized in that** the distances (L3) from the outer axes (18, 21) to the hinge (11) are identical.

6. Mechanism (16) according to one of the preceding claims, **characterized in that** the actuation system (23) comprises a control lever (31) secured to the crank (24) and bearing a cam follower (29) which cooperates with a cam track (30).

7. Mechanism (16) according to one of Claims 1 to 5, **characterized in that** the actuation system (23) comprises a motor coupled to the axis (25) of rotation of the crank and driving the latter in rotation.

8. Mechanism (16) according to one of the preceding claims, **characterized in that** it comprises at least two superposed right connecting rods (17) and at least two superposed left connecting rods (20).

9. Unit (2) for moulding containers, which comprises a folding mould (4) comprising a right half-mould (5) and a left half-mould (6) that are mounted articulated relative to one another about a common hinge (11) between a closed position in which the half-moulds (5, 6) are pressed against one another and an open position in which the half-moulds (5, 6) are separated angularly from one another, and a mechanism (16) for controlling the opening of the folding mould (4) according to one of the preceding claims.

10. Machine (1) for manufacturing containers which comprises a carousel and a plurality of moulding units (2) according to Claim 9, mounted on the carousel.
